# EUROPÄISCHE PATENTSCHRIFT

(11) **EP 0 973 061 B1**
(45) Veröffentlichungstag und Bekanntmachung des Hinweises auf die Patenterteilung: **16.06.2004**
(21) Anmeldenummer: 99112878.6
(22) Anmeldetag: 03.07.1999
(51) Int. Cl.: G03B 19/12

(54) **Elektromotorischer Spiegelantrieb in einer Spiegelreflexkamera**
Electric motor mirror drive in a reflex camera
Entraînement de miroir à moteur électrique dans un appareil photographique reflex

(30) Priorität: 17.07.1998 DE 19832243
(43) Veröffentlichungstag der Anmeldung: 19.01.2000
(73) Patentinhaber: Rollei Fototechnic GmbH, 38126 Braunschweig (DE)
(72) Erfinder: Mielke, Bodo, 38304 Wolfenbüttel (DE)
(74) Vertreter: Gramm, Werner, Prof. Dipl.-Ing.

(56) Entgegenhaltungen:
- US-A- 3 852 791
- US-A- 4 338 009
- US-A- 4 502 769
- US-A- 4 786 929
- US-A- 5 758 217

## Beschreibung

Die Erfindung betrifft einen elektromotorischen Antrieb zur Verschwenkung des Sucherspiegels in einer einäugigen Spiegelreflexkamera zwischen seiner Sucher- und seiner Aufnahmestellung.

Eine derartige Ausführungsform läßt sich der DE 44 47 092 A1 entnehmen. Der elektrische Antrieb ist hier als Tauchspulenantrieb ausgebildet, dessen Magnetkopf ortsfest innerhalb des Kameragehäuses befestigt ist. An den Spulenkörper des Tauchspulenantriebs ist eine winkelförmige Kulisse angespritzt, deren einer Kulissenschenkel an seinem freien Ende gabelförmig ausgebildet ist und dadurch eine Schlitzführung bildet, die einen Stift übergreift, der achsparallel zu und mit einem Hebelabstand von der Schwenkachse des Sucherspiegels an diesem befestigt ist.

Nachteilig wirkt sich bei diesen Anordnungen die funktionsbedingte einseitige Lagerung des Sucherspiegels aus, dessen Masse (Eigengewicht) ein permanentes Drehmoment um die Spiegel-Schwenkachse ausübt, was bei einer Lageänderung der Kamera zu unterschiedlichen Spiegel-Laufzeiten und überdies zu Erschütterungen führen kann.

US 3 852 791 zeigt eine gegensinnige elektromagnetische Dämpfung eines Sucherspiegels.

Der Erfindung liegt die Aufgabe zugrunde, einen Spiegelantrieb zu entwickeln, der eine lageunabhängige Verschwenkung ermöglicht.

Diese Aufgabe wird erfindungsgemäß gelöst durch einen Antriebsarm, der einen integralen Bestandteil des elektromotorischen Antriebes bildet, um eine ortsfeste, parallel zur Sucher-Spiegel-Schwenkachse liegende Drehachse elektromotorisch reversierend verschwenkbar und mit dem Sucherspiegel kinematisch so gekoppelt ist, daß die Verschwenkung des Antriebsarmes eine gegensinnige Verschwenkung des Sucherspiegels hervorruft.

Dabei ist es zweckmäßig, wenn sich der Sucherspiegel mit dem mit ihm kinematisch verbundenen Antriebsarm lagenunabhängig im Gleichgewicht befindet.

Erfindungsgemäß wird somit ein Masseanteil des elektromotorischen Antriebs zur Kompensation des vom Spiegel ausgeübten Massendrehmomentes benutzt. Zu dieser Kompensation werden also keine zusätzlichen Gegengewichte oder dergleichen eingesetzt.

Die kinematische Verbindung zwischen dem Antriebsarm und dem Spiegel erfolgt in an sich bekannter Weise durch eine Stift/Schlitzführung, bei der eine starr mit dem Antriebsarm verbundene Schlitzführung einen Stift übergreift, der achsparallel zu und mit einem Hebelabstand von der Schwenkachse des Sucherspiegels an diesem befestigt ist.

Um einen vollständig ausbalancierten Spiegelantrieb zu erhalten, ist erfindungsgemäß vorgesehen, daß das vom Eigengewicht des Antriebsarmes auf den Spiegelstift ausgeübte Drehmoment um die Drehachse des Antriebsarmes etwa entgegengesetzt gleichgroß ist wie das vom Eigengewicht des Sucherspiegels auf seinen Stift ausgeübte Drehmoment um die Spiegel-Schwenkachse.

In einer bevorzugten Ausführungsform ist der Antriebsarm als U-förmiges, einen Magnetweicheisen-Rückschluß bildendes Joch ausgebildet, dessen U-Schenkel auf ihrer Innenseite mit je einer Magnetscheibe bestückt sind, zwischen die zwei ortsfest nebeneinander in gleicher Höhe angeordnete, entgegengerichtet stromdurchflossene Flachspulen eintauchen.

Möglich ist aber auch eine kinematische Umkehr dieser bevorzugten Ausführungsform, wobei dann der Antriebsarm die beiden genannten Flachspulen aufweist, die gemeinsam gegenüber einem ortsfest angeordneten Joch zwischen dessen Magnetscheiben hindurch um die genannte Drehachse verschwenkbar sind.

Vorzugsweise ist jeweils eine den beiden Verschwenkendstellungen des Antriebsarmes zugeordnete Magnetrast vorgesehen, die ein ortsfester, die zugeordnete Flachspule übergreifender Weicheisenbügel sein kann, der mit der ihn überdeckenden Magnetscheibe einen kleinen Luftspalt einschließt.

Nachteilig bei den meisten der vorbekannten Antriebssysteme ist unter anderem, daß die Bewegungsenergie des Spiegels in den Endlagenanschlägen Erschütterungen hervorruft. Dieser Nachteil wird bei denjenigen Ausführungsformen noch verstärkt, bei denen elektromotorische Antriebe fest mit dem Spiegel drehbar verbunden sind. Die im Stand der Technik vorgeschlagenen Dämpfungsmaßnahmen mittels Luft- oder Gummidämpfung können das Problem nicht vollständig lösen. Auch die weiterhin vorgeschlagene Dämpfungsmaßnahme durch Ausnutzung der Massenträgheit eines Gegengewichtes, das über Getriebeglieder in den Endlagenbereich eingreifen und somit Erschütterungen vermeiden soll, ist durch die zusätzliche Anordnung eines Gegengewichtes eher nachteilig. Erfindungsgemäß wird daher für die Verschwenkung des Sucherspiegels eine elektromagnetische Dämpfung vorgeschlagen, bei der die Dämpfung vorzugsweise über die Spiegellaufzeit oder über den Spiegel-Drehwinkel geregelt wird. Besonders zweckmäßig erscheint hierfür eine Regelungseinrichtung, die eine ortsfeste Lichtschranke aufweist, die mit einer am Antriebsarm befestigten Reihe Schlitze für das Lichtschrankensignal zusammenwirkt.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung ist eine als Beispiel dienende Ausführungsform der Erfindung dargestellt. Es zeigen:
- **Figur 1**: in schaubildlicher Darstellung einen elektromotorischen Antrieb für die Verschwenkung eines Sucherspiegels;
- **Figur 2**: in schematischer Darstellung die Ausführungsform gemäß Figur 1 in anderer Blickrichtung;
- **Figur 3**: die Ausführungsform gemäß Figur 2 in Draufsicht bei angenommener horizontaler Kameralage;
- **Figur 4**: die Darstellung gemäß Figur 3 in anderer Verschwenkstellung und
- **Figur 5**: Diagramm für die Spiegeldämpfung über die Spiegellaufzeit.

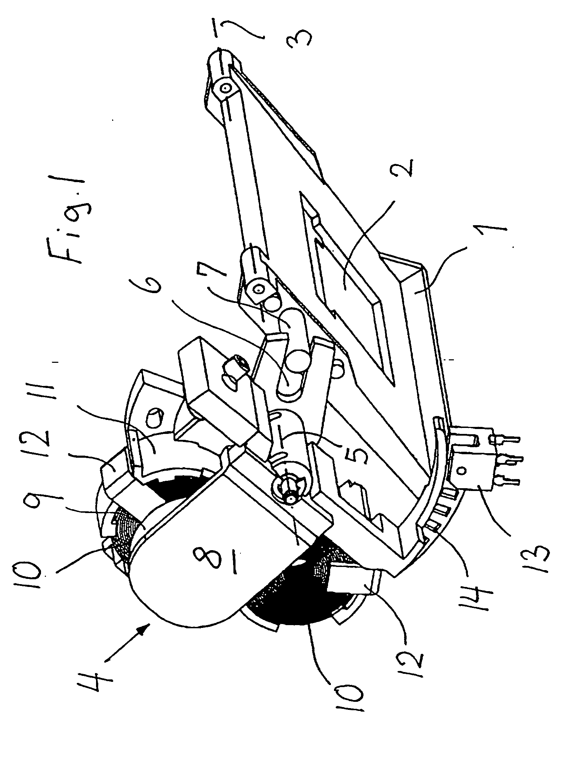

Figur 1 zeigt einen elektromotorischen Antrieb zur Verschwenkung einer Sucherspiegelklappe 1 mit integriertem Sucherspiegel 2 um eine in einem nicht näher dargestellten Kameragehäuse gelagerte Schwenkachse 3.

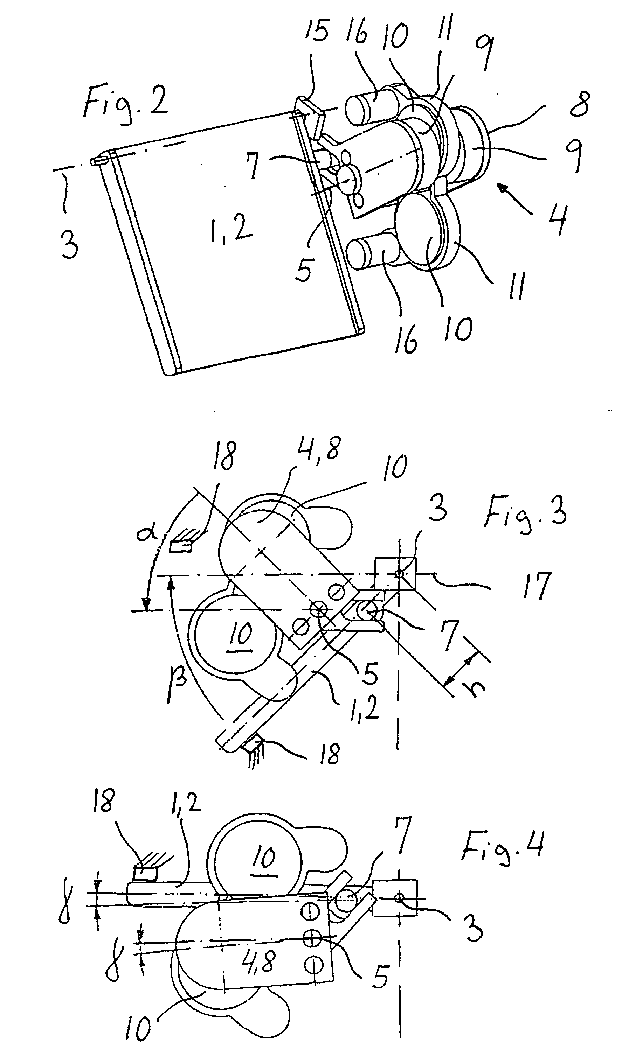

Die Verschwenkung des Sucherspiegels zwischen seiner Sucher- und seiner Aufnahmestellung erfolgt über einen Antriebsarm 4, der einen integralen Bestandteil des elektromotorischen Antriebes bildet und um eine ortsfeste, parallel zur Sucherspiegel-Schwenkachse 3 liegende Drehachse 5 elektromotorisch reversierend verschwenkbar ist. Dieser Antriebsarm 4 ist mit der Sucherspiegelklappe 1 über eine Stift/Schlitzführung kinematisch verbunden, bei der eine starr mit dem Antriebsarm 4 verbundene Schlitzführung 6 einen Stift 7 übergreift, der achsparallel zu und mit einem Hebelabstand h (siehe z. B. Figur 3) von der Schwenkachse 3 der Sucherspiegelklappe 1 an dieser befestigt ist.

Der Antriebsarm 4 ist als U-förmiges, einen Magnetweicheisen-Rückschluß bildendes Joch 8 ausgebildet, dessen U-Schenkel auf ihrer Innenseite mit je einer Magnetscheibe 9 bestückt sind. Zwischen diese beiden Magnetscheiben 9 tauchen zwei ortsfest nebeneinander in gleicher Höhe angeordnete, entgegengerichtet stromdurchflossene Flachspulen 10 ein, deren Spulenkörper mit dem Bezugszeichen 11 versehen ist.

Den beiden Verschwenkendstellungen des Antriebsarmes 4 ist jeweils eine Magnetrast 12 zugeordnet, die ein ortsfest mit dem Spulenkörper 10 verbundener, die zugeordnete Flachspule 10 übergreifender Weicheisenbügel ist, dessen Bügelende nahe im Wirkbereich der Magnetscheibe 9 justiert ist. Die Magnetrast 12 sichert den Sucherspiegel 2 in seiner Sucher- bzw. Aufnahmestellung.

Figur 1 läßt ferner eine elektromagnetische Dämpfung für die Verschwenkung der Sucherspiegelklappe 1 erkennen. Vorgesehen ist hierfür eine ortsfeste Lichtschranke 13, die mit einer am Antriebsarm 4 befestigten Reihe Schlitze 14 für das Lichtschrankensignal zusammenwirkt und bei der Verschwenkung der Sucherspiegelklappe 1 über die Spiegellaufzeit bei den stromdurchflossenen Flachspulen 10 einen Gegenimpuls auslöst, der die Verschwenkung der Sucherspiegelklappe 1 vor ihrem Anschlag an einem in Figur 3 dargestellten Spiegelanschlag 18 dämpft.

In Figur 2 ist angedeutet, daß die Schwenkachse 3 der Sucherspiegelklappe 1 in einem Spiegelkasten 15 gelagert ist. Ferner ist angedeutet, daß die Spulenkörper 11 über Befestigungspfeiler 16 ortsfest am Spiegelkasten 15 festgelegt sind.

Erfindungswesentlich ist, daß sich der Sucherspiegel 1, 2 mit dem mit ihm kinematisch verbundenen Antriebsarm 4 lagenunabhängig im Gleichgewicht befindet. Dies läßt sich in einer zweckmäßigen Ausführungsform dadurch erreichen, daß das vom Eigengewicht des Antriebsarms 4 auf den Spiegel-Stift 7 ausgeübte Drehmoment um die Drehachse 5 des Antriebsarmes 4 etwa entgegengesetzt gleichgroß ist wie das vom Eigengewicht des Sucherspiegels 1, 2 auf seinen Stift 7 ausgeübte Drehmoment um die Spiegel-Schwenkachse 3.

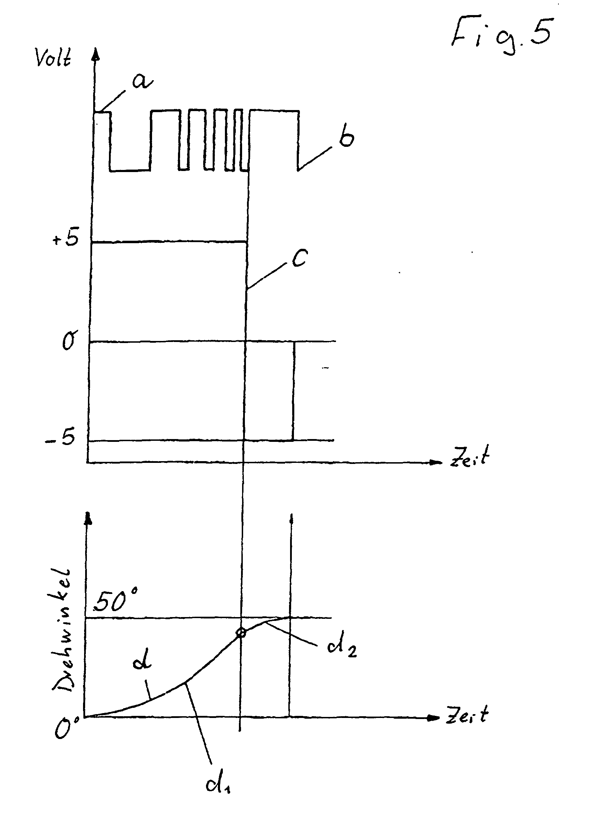

Figur 3 zeigt die Ausführungsform gemäß Figur 2 in Draufsicht, wobei die Linie 17 eine horizontale Kameralage symbolisiert. Gegenüber dieser Horizontallinie 17 weist der Antriebsarm 4 einen Verschwenkwinkel α von z. B. 45° auf. Die nach unten abgeklappte Sucherspiegelklappe 1 weist gegenüber der Horizontalen 17 einen Verschwenkwinkel β von ebenfalls z. B. 45° auf. Dabei sollen sich die von dem Antriebsarm 4 einerseits und von dem Sucherspiegel 1, 2 andererseits auf den Spiegel-Stift 7 ausgeübten Massen-Drehmomente im Gleichgewicht befinden und zwar für jede Verschwenkstellung und somit auch für die in Figur 4 dargestellte Verschwenkstellung, bei der die eingezeichneten Winkel γ jeweils etwa 5° betragen, was einem Spiegel-Drehwinkel von 50° entspricht.

In Figur 3 sind die beiden die Endstellungen der Sucherspiegelklappe 1 definierenden Anschläge 18 angedeutet.

Figur 5 zeigt Diagramme für die Spiegeldämpfung. Die obere Kurve a zeigt das Lichtschrankensignal, wobei der Kurvenendpunkt b das Wegende, also die Anlage der Sucherspiegelklappe 1 am oberen Anschlag 18 angeben.

Die mittlere Kurve c zeigt den für die Dämpfung ausgeübten Gegenimpuls, der kurz vor dem Wegende b einsetzt.

Die untere Kurve d zeigt den über die Zeit aufgetragenen Drehwinkel des Spiegels.

## Patentansprüche

1. Elektromotorischer Antrieb zur Verschwenkung des Sucherspiegels (1, 2) in einer einäugigen Spiegelreflexkamera zwischen seiner Sucher- und seiner Aufnahmestellung, **gekennzeichnet durch** einen Antriebsarm (4), der einen integralen Bestandteil des elektromotorischen Antriebes bildet, um eine ortsfeste, parallel zur Sucher-Spiegel-Schwenkachse (3) liegende Drehachse (5) elektromotorisch reversierend verschwenkbar und mit dem Sucherspiegel (1, 2) kinematisch so gekoppelt ist, daß die Verschwenkung des Antriebsarmes (4) eine gegensinnige Verschwenkung des Sucherspiegels (1, 2) hervorruft.

2. Antrieb nach Anspruch 1, **dadurch gekennzeichnet, daß** sich der Sucherspiegel (1, 2) mit dem mit ihm kinematisch verbundenen Antriebsarm (4) lagenunabhängig im Gleichgewicht befindet.

3. Antrieb nach Anspruch 1 oder 2, **dadurch gekennzeichnet, daß** die genannte kinematische Verbindung eine Stift/Schlitzführung (6, 7) ist, bei der eine starr mit dem Antriebsarm (4) verbundene Schlitzführung (6) einen Stift (7) übergreift, der achsparallel zu und mit einem Hebelabstand (h) von der Schwenkachse (3) des Sucherspiegels (1, 2) an diesem befestigt ist.

4. Antrieb nach Anspruch 3, **dadurch gekennzeichnet, daß** das vom Eigengewicht des Antriebsarmes (4) auf den Spiegelstift (7) ausgeübte Drehmoment um die Drehachse (5) des Antriebsarmes (4) etwa entgegengesetzt gleichgroß ist wie das vom Eigengewicht des Sucherspiegels (1, 2) auf seinen Stift (7) ausgeübte Drehmoment um die Spiegel-Schwenkachse (3).

5. Antrieb nach einem der vorhergehenden Ansprüche, **dadurch gekennzeichnet, daß** der Antriebsarm (4) als U-förmiges, einen Magnetweicheisen-Rückschluß bildendes Joch (8) ausgebildet ist, dessen U-Schenkel auf ihrer Innenseite mit je einer Magnetscheibe (9) bestückt sind, zwischen die zwei ortsfest nebeneinander in gleicher Höhe angeordnete, entgegengerichtet stromdurchflossene Flachspulen (10) eintauchen.

6. Antrieb nach einem der vorhergehenden Ansprüche, **gekennzeichnet durch** eine je eine den beiden Verschwenkendstellungen des Antriebsarmes (4) zugeordnete Magnetrast (12).

7. Antrieb nach Anspruch 6, **dadurch gekennzeichnet, daß** die Magnetrast (12) ein ortsfester, die zugeordnete Flachspule (10) übergreifender Weicheisenbügel ist, der mit der ihn überdeckenden Magnetscheibe (9) einen kleinen Luftspalt einschließt.

8. Antrieb nach einem der vorhergehenden Ansprüche, **gekennzeichnet durch** eine elektromagnetische Dämpfung (13, 14) für die Verschwenkung des Sucherspiegels (1, 2).

9. Antrieb nach Anspruch 8, **dadurch gekennzeichnet, daß** die Dämpfung über die Spiegellaufzeit oder über den Spiegel-Drehwinkel (b) geregelt ist.

10. Antrieb nach Anspruch 9, **gekennzeichnet durch** eine Regelungseinrichtung, die eine ortsfeste Lichtschranke (13) aufweist, die mit einer am Antriebsarm (4) befestigten Reihe Schlitze (14) für das Lichtschrankensignal zusammen wirkt.

## Claims

1. Electromotive drive for swivelling the viewfinder mirror (1, 2) in a single-lens mirror reflex camera between its viewfinder position and its taking position, **characterized by** a drive arm (4), which forms an integral component of the electromotive drive, can be electromotively swivelled in a reversing manner about a fixed-in-place pivot axis (5) lying parallel to the viewfinder-mirror swivel axis (3) and is kinematically coupled with the viewfinder mirror (1, 2) in such a way that the swivelling of the drive arm (4) induces a swivelling in the opposite direction of the viewfinder mirror (1, 2).

2. Drive according to Claim 1, **characterized in that**, irrespective of its position, the viewfinder mirror (1, 2) is in equilibrium with the drive arm (4) kinematically connected to it.

3. Drive according to Claim 1 or 2, **characterized in that** said kinematic connection is a pin/slot guide (6, 7), in which a slot guide (6) rigidly connected to the drive arm (4) reaches over a pin (7), which is fastened at the viewfinder mirror (1, 2) axially parallel to and with a lever distance (h) from the swivel axis (3).

4. Drive according to Claim 3, **characterized in that** the torque exerted by the dead weight of the drive arm (4) on the mirror pin (7) about the pivot axis (5) of the drive arm (4) is approximately equal and opposite to the torque exerted by the dead weight of the viewfinder mirror (1, 2) on the pin (7) of the latter about the mirror swivel axis (3).

5. Drive according to one of the preceding claims, **characterized in that** the drive arm (4) is designed as a U-shaped yoke (8), forming a magnetic soft-iron keeper, the U limbs of which are each fitted on their inner side with a magnet disc (9), between which there enter two flat coils (10) arranged at the same height, fixed-in-place next to one another and flowed through with current in opposite directions.

6. Drive according to one of the preceding claims, **characterized by** a magnetic detent (12) assigned to each one of the two swivelling end positions of the drive arm (4).

7. Drive according to Claim 6, **characterized in that** the magnetic detent (12) is a fixed-in-place soft-iron loop which reaches over the assigned flat coil (10) and, with the magnet disc (9) covering over it, encloses a small air gap.

8. Drive according to one of the preceding claims, **characterized by** an electromagnetic damping (13, 14) for the swivelling of the viewfinder mirror (1, 2).

9. Drive according to Claim 8, **characterized in that** the damping is regulated by the mirror running time or by the mirror pivoting angle (b).

10. Drive according to Claim 9, **characterized by** a regulating device which has a fixed-in-place light barrier (13), which acts together with a row of slots (14), fastened on the drive arm (4), for the light barrier signal.

## Revendications

1. Entraînement à moteur électrique pour le pivotement du miroir de viseur (1, 2) dans un appareil photographique reflex mono-objectif entre sa position de visée et sa position de prise de vue, **caractérisé par** un bras d'entraînement (4) qui fait partie intégrante de l'entraînement par moteur électrique, peut pivoter en va et vient par moteur électrique autour d'un axe de rotation (5) fixe, parallèle à l'axe de pivotement du miroir de viseur (3), et est couplé cinématiquement avec le miroir de viseur (1, 2), de telle manière que le pivotement de l'arbre d'entraînement (4) suscite un pivotement du miroir de viseur (1, 2) en sens contraire.

2. Entraînement selon la revendication 1, **caractérisé en ce que** le miroir de viseur (1, 2) se trouve en équilibre avec le bras d'entraînement (4) qui lui est relié cinématiquement, quelle que soit la position.

3. Entraînement selon la revendication 1 ou 2, **caractérisé en ce que** la liaison cinématique précitée est un guidage à tenon et fente (6, 7), dans lequel un guidage à fente (6) lié rigidement au bras d'entraînement (4) chevauche un tenon (7) qui est fixé au miroir de viseur (1, 2) parallèlement à l'axe de ce dernier et à une distance de bras de levier (h) de l'axe de pivotement (3) du miroir de viseur (1, 2).

4. Entraînement selon la revendication 3, **caractérisé en ce que** le moment exercé par le poids propre du bras d'entraînement (4) sur le tenon (7) du miroir autour de l'axe de rotation (5) du bras d'entraînement (4) est sensiblement égal et opposé au moment exercé par le poids propre du miroir de viseur (1, 2) sur son tenon (7) autour de l'axe (3) de pivotement du miroir.

5. Entraînement selon l'une des revendications précédentes, **caractérisé en ce que** le bras d'entraînement (4) est réalisé sous la forme d'une culasse (8) en forme de U constituant un retour en fer magnétique doux dont les branches du U sont équipées chacune sur leur côté intérieur d'une galette magnétique (9), entre lesquelles s'engagent deux bobines plates (10) fixes agencées côte à côte à même hauteur, traversées par des courants de sens contraires.

6. Entraînement selon l'une des revendications précédentes, **caractérisé par** une retenue magnétique (12) associée à chacune des deux positions extrêmes de pivotement du bras d'entraînement (4).

7. Entraînement selon la revendication 6, **caractérisé en ce que** la retenue magnétique (12) est un étrier fixe en fer doux chevauchant la bobine plate (10) associée, qui forme un petit entrefer avec la galette magnétique (9) qui le recouvre.

8. Entraînement selon l'une des revendications précédentes, **caractérisé par** un amortissement électromagnétique (13, 14) pour le pivotement du miroir de viseur (1, 2).

9. Entraînement selon la revendication 8, **caractérisé en ce que** l'amortissement est régulé sur le temps de parcours du miroir ou sur l'angle de rotation (b) du miroir.

10. Entraînement selon la revendication 9, **caractérisé par** un dispositif de régulation qui comprend une barrière lumineuse fixe (13) qui pour le signal de barrière lumineuse coopère avec une rangée de fentes (14) fixées sur le bras d'entraînement (4).
